Europäisches Patentamt

(19) European Patent Office

Office européen des brevets

(11) Publication number: **0 142 480**
**A2**

(12) **EUROPEAN PATENT APPLICATION**

(21) Application number: **84850324.9**

(22) Date of filing: **25.10.84**

(51) Int. Cl.⁴: **A 01 C 7/10**
**A 01 C 15/00**

(30) Priority: **02.11.83 SE 8306032**

(43) Date of publication of application:
**22.05.85 Bulletin 85/21**

(84) Designated Contracting States:
**DE FR GB**

(71) Applicant: **AKTIEBOLAGET OVERUMS BRUK**
**Box 100**
**S-590 96 Overum(SE)**

(72) Inventor: **Andersson, Yngve Berntmund**
**Langgatan 9**
**S-274 00 Skurup(SE)**

(74) Representative: **Hagelbäck, Evert Isidor**
**c/o AB Electrolux Patentavdelningen**
**S-105 45 Stockholm(SE)**

(54) **Device for varying the outfeed quantity in a sowing machine or a fertilizer distributor during running of the machine.**

㊗ A device in a sowing machine or a fertilizer distributor comprises a container for the material to be spread and spreading means to which the material is transferred from a feed-out device on the container. The quantity of the material can be varied by adjusting the feeding velocity of the feed-out device by means of an adjustment device driven by a drive means included in the machine. Between the feed-out device and the drive means (33) a gear box (29) with a plurality of transmissions (34,35,36) is arranged. The incoming shaft (31) of the gear box is driven by the drive means and the outgoing shaft (28) drives the feed-out device. The gear box comprises at least one freewheel transmission (36) acting between the incoming shaft and the outgoing shaft.

EP 0 142 480 A2

./...

Croydon Printing Company Ltd.

Fig. 4

Device for varying the outfeed quantity in a sowing machine
or a fertilizer distributor during running of the machine

This invention relates to a device in a sowing machine or a fertilizer distributor comprising a container for the material to be spread and spreading means to which the material is transferred from a feed-out device on the container, the quantity of the material fed out being variable by adjusting the feeding velocity by means of an adjustment device driven by a drive means included in the machine.

Machines of the type referred to above are previously known. In a known embodiment there is a so-called variator, at which the quantity of material to be fed out is set before spreading starts. Such a variator is described in Swedish Patent 316,664. The incoming shaft of the variator is connected to some drive means, for example the wheels of the machine, whereas the outgoing shaft drives one shaft or several shafts with rollers having several cams. The rollers are situated below openings in a storage container of the machine and feed the material into hoses in which it is fed by pneumatic means to the spreading devices which are situated on a transverse boom at the rear edge of the machine or to shares disposed in the transverse direction of the machine. The air stream in the hoses is created by a fan on the machine. The quantity of material fed out is directly proportional to the velocity of the roller.

It is also common to use conventional gear boxes of great gear ratio in order to drive the feed rollers and to feed the material directly to the ground or to the shares.

A drawback of the known arrangements is that the portion, i.e. the quantity discharged per unit area, cannot be varied during the operation, which is often desired since the character of the ground and hence the ideal spreading varies over

2                                    0142480

large areas. In order to change the quantity fed out the machine has to be stopped, the operator has to leave his seat on the towing vehicle and go to the machine and change the setting. When an area of the field requiring a higher or a lower portion, respectively, has been passed, the operator again has to stop the towing vehicle and leave it in order to set back the previous setting. The time needed for this procedure is too long for such settings to be carried out in practice.

The invention is a solution of the above problem and it is characterized by a device having the characteristic features related in the following claims.

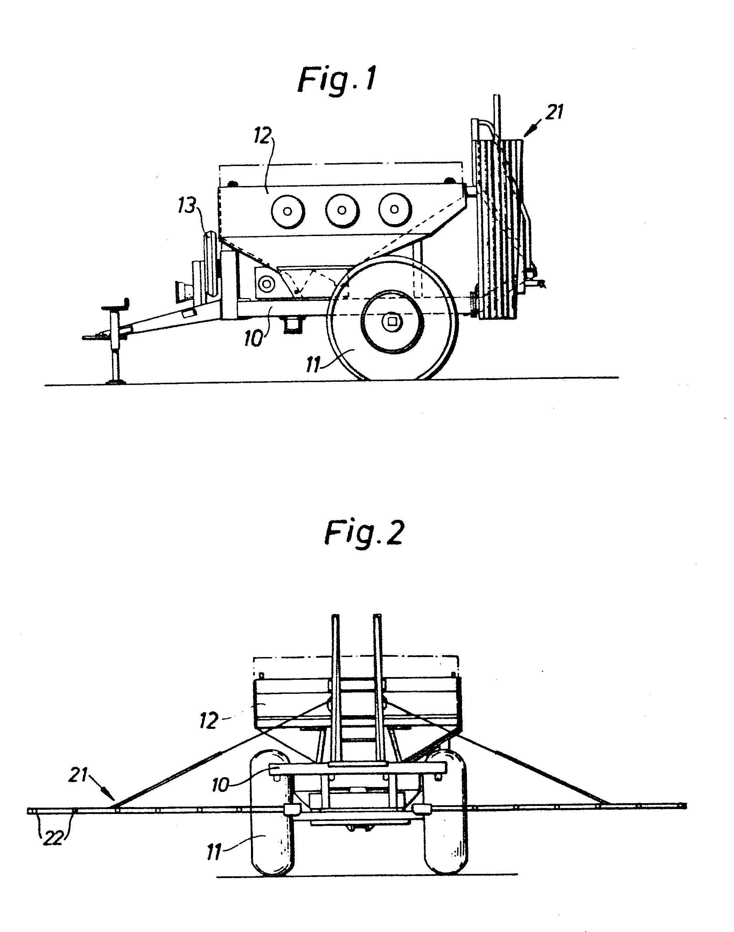

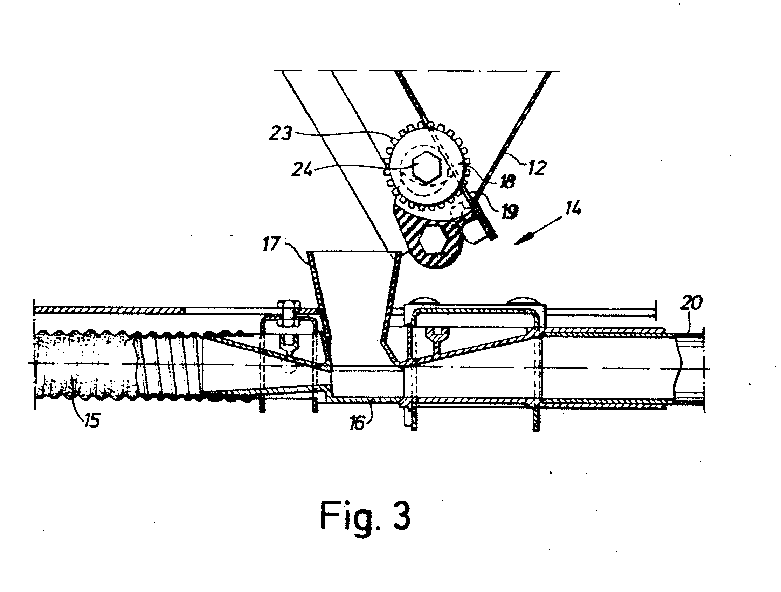

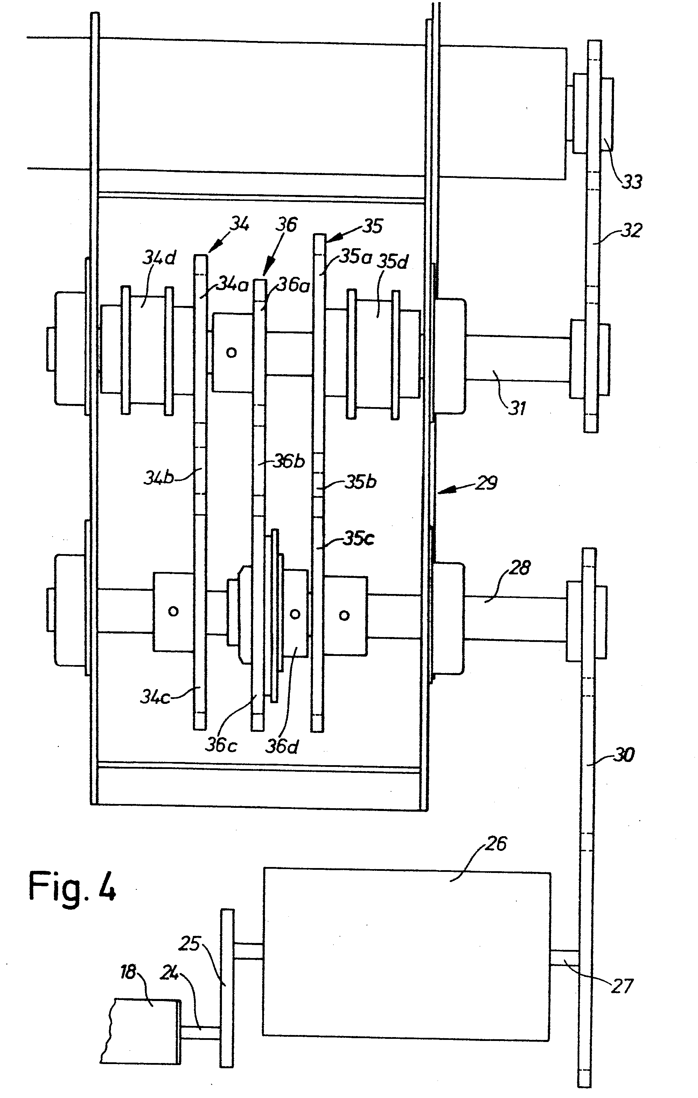

An embodiment of the invention will now be described with reference to the accompanying drawings in which Fig. 1 is a side elevation view of a fertilizer distributor in transporting position and Fig. 2 is a vertical projection of the rear of the machine in operating position. Fig. 3 shows a vertical section through the feed-out device of the machine shown in Figs. 1 and 2, and Fig. 4 is a vertical section of a gear box intended to be a part of the machine.

As appears in Figs. 1 and 2 the machine comprises a frame 10 supported on wheels 11. The frame is provided with a fertilizer container 12. In the front part of the machine is a fan 13 which can be driven directly from the power take-off in the towing vehicle, not shown, the fan creating an air stream in a hose 15 connected to a feed-out device 14. The hose 15 is connected to one end of a nozzle 16 having an upwardly directed funnel 17 into which the fertilizer falls after having been fed by a feed roller 18 from the container 12 through openings 19. From the other end of the nozzle 16 extends a hose 20 which directs the fed-out material to a spreading nozzle 22 arranged on a spreading boom 21. The machine has several feed-out devices with hoses each hose being provided for each spreading nozzle. These nozzles are equally spaced along the whole length of the spreading boom. As a rule, there are two feed-out rollers which are placed at either side of the machine, each roller serving one half of the spreading boom. The spreading boom comprises several sections which are foldable relative to one another and can be moved from the transporting position shown in Fig. 1 to the operating position shown in Fig. 2.

The feed-out roller 18, which has several cams 23, has a shaft 24 which directly or via a transmission 25 is connected to a variator 26. The incoming shaft 27 of the variator is driven by the outgoing shaft 28 of a gear box 29 by means of a transmission 30. The incoming shaft 31 of the gear box 29 is driven via a transmission 32 by a drive means 33 connected in a suitable way to the shaft of the wheels of the machine.

The variator is designed such that the rotation velocity of the rollers can be set on fixed values before start of the operation, and for each value the rotation velocity is directly proportional to the advancing speed of the machine. It is not possible to change the selected value unless the machine is stopped and the operator manually changes the setting.

The gear box 29 comprises at least two and in the embodiment shown three chain transmissions 34, 35, 36, each one forming a connection between the incoming shaft 31 and the outgoing shaft 28. The transmission 34 comprises a chain wheel 34a supported on the incoming shaft 31 and via a chain 34b connected to a chain wheel 34c which is permanently fixed to the outgoing shaft. By means of a clutch 34d the chain wheel 34a can be connected to the incoming shaft. The transmission 35 is designed in the same way as the transmission 34 and thus has a chain wheel 35a on the incoming shaft which via a chain 35b is connected to a chain wheel 35c fixed to the outgoing shaft. Also here there is a clutch 35d which can be activated to connect the incoming shaft 31 to the chain wheel 35a. The clutch 34d is designed so as to operate as a freewheel if the clutches 34d and 35d are in engagement simultaneously. The clutches can be operated from the towing vehicle by any suitable means. Preferably, however, electrical means are used.

The transmission 36 comprises a chain wheel 36a which via a chain 36b is connected to a chain wheel 36c. The chain wheel 36a is permanently fixed to the incoming shaft 31 whereas the chain wheel 36c is fixed to a freewheel hub 36d. The freewheel hub allows the outgoing shaft 28 to rotate faster than what is determined by the gear ratio between the chain wheels 36a and 36c, whereas the lowest rotation velocity of the outgoing shaft is determined by the said gear ratio. This means that the incoming shaft 27 of the variator will always rotate when the machine moves to spread the fertilizer, which means that the machine will also spread while the different feed-out velocities are being changed.

The gear ratio between the three transmissions 34, 35 and 36 are chosen so that the transmission 35 will give the outgoing shaft 28 of the gear box the highest rotation velocity whereas the transmission 34 gives a lower velocity and the transmission 36 the lowest velocity. The fed-out quantity decreases with the velocity of the outgoing shaft 28.

The device operates in the following way.

After setting the variator at the desired value for the quantity to be fed out and, if desired, with a subsequent feeding test, the clutch 34d is activated, whereby the incoming shaft 31 of the gear box drives the outgoing shaft 28 of the gear box with a given velocity corresponding to the advancing speed of the machine. Thus, a given quantity of material is fed per unit area. If this quantity with respect to the character of the ground has to be increased somewhere the transmission 35 is engaged by activating the clutch 35d. Thereby there will be no driving force from the transmission 34 but instead the transmission 35 will transmit the driving force to the outgoing shaft 28 and the fed-out quantity per unit area will increase. Correspondingly, the fed-out quantity can be decreased by deactivating the two clutches 34d and 35d, so that driving is effected over the transmission 36.

It is of course possible within the frame of the invention to place the gear box in any suitable location between the drive means 33 and the feed-out roller 18, i.e. also after the variator as seen in the direction of force transmission. The device according to the invention can also be used in other types of drive means for feed devices as long as it is connected between the drive means and the feed-out device. The clutches 34d and 35d can also be placed on the outgoing shaft 28 and the freewheel hub can be placed on the shaft 31. In order to facilitate handling of the device according to the invention it is suitable to provide control means in the form of switches and indicating lamps on a movable panel in the machine and to place the panel in front of the operator of the towing vehicle. The actual value is automatically indicated when the switch is set in a suitable position, for instance between a reduction of 20% and 40%, respectively, of the normal portion.

Although the above described embodiment relates to spreading of fertilizer the device is also applicable to spreading of seed.

Claims

1.    A device in a sowing machine or a fertilizer distributor comprising a container for the material to be spread and spreading means to which the material is transferred from a feed-out device on the container, the quantity of the material being variable by adjusting the feeding velocity of the feed-out device by means of an adjustment device driven by a drive means included in the machine, c h a r a c t e r i z e d in that between the feed-out device (18) and the drive means (33) a gear box (29) with a plurality of transmissions is arranged, the incoming shaft (31) of the gear box being driven by the drive means and the outgoing shaft (28) driving the feed-out device, and in that the gear box comprises at least one freewheel transmission (36) acting between the incoming shaft and the outgoing shaft.

2.    A device according to Claim 1, c h a r a c t e r i z e d in that the power transmitting means (36a) at the incoming end of the freewheel transmission is permanently fixed to the incoming shaft (31) whereas the outgoing end of the freewheel transmission has a freewheel hub (36d) allowing the outgoing shaft (38) to rotate faster than the power transmitting means (36c) located at the outgoing end of the said transmission.

3.    A device according to Claim 1 or 2, c h a r a c t e r i z e d in that the gear box (29) comprises several clutches (34d,35d) with transmissions (34a,34b,34c, 35a,35b,35c) which have different gear ratios and transmit the rotation movement of the incoming shaft to the outgoing shaft.

4.    A device according to any of claims 1 - 3, c h a r a c t e r i z e d in that the transmissions are either chain wheels including chains or gear wheels.

5 .    A device according to Claim 3 or Claim 4, c h a r a c t e r i z e d in that the clutches (34d,35d) with relevant parts of the transmissions are arranged on the incoming shaft (31) of the gear box whereas the parts of the transmissions on the outgoing shaft are fixed to this shaft.

6.    A device according to any of Claims 3 - 5, c h a r a c t e r i z e d in that the clutches (34d,35d) are electrically operable from the towing vehicle.

7.    A device according to any preceding claim, c h a r a c t e r i z e d in that simultaneously as one of the transmissions is engaged a corresponding indication is automatically made on a panel, suitably placed in front of the operator.

8.    A device according to any preceding claim, c h a r a c t e r i z e d in that of the transmissions included in the gear box the freewhel transmission (36) is the one which gives the outgoing shaft the lowest rotation velocity.

# Fig.1

# Fig.2

Fig. 3

Fig. 4